(19) **Europäisches Patentamt / European Patent Office / Office européen des brevets**

(11) **EP 3 028 184 B1**

(12) # EUROPEAN PATENT SPECIFICATION

(45) Date of publication and mention
of the grant of the patent:
**05.12.2018 Bulletin 2018/49**

(21) Application number: **14753363.2**

(22) Date of filing: **29.07.2014**

(51) Int Cl.:
***G06F 17/30*** (2006.01)

(86) International application number:
**PCT/US2014/048670**

(87) International publication number:
**WO 2015/017439 (05.02.2015 Gazette 2015/05)**

(54) **METHOD AND SYSTEM FOR SEARCHING IMAGES**

VERFAHREN UND SYSTEM ZUM SUCHEN VON BILDERN

PROCÉDÉ ET SYSTÈME POUR RECHERCHER DES IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2013  CN 201310328673**
**28.07.2014  US 201414444927**

(43) Date of publication of application:
**08.06.2016  Bulletin 2016/23**

(73) Proprietor: **Alibaba Group Holding Limited**
**Grand Cayman (KY)**

(72) Inventors:
• **LIU, Ruitao**
**Hangzhou 311121 (CN)**
• **ZHANG, Hongming**
**Hangzhou 311121 (CN)**
• **RU, Xinfeng**
**Hangzhou 311121 (CN)**

(74) Representative: **McKinnon, Alistair James**
**WP Thompson**
**138 Fetter Lane**
**London EC4A 1BT (GB)**

(56) References cited:
**US-A1- 2005 162 523     US-A1- 2010 017 290**

• **SHI CHEN ET AL: "AdVR: Linking Ad Video with Products or Service", 6 January 2010 (2010-01-06), ADVANCES IN MULTIMEDIA MODELING, SPRINGER BERLIN HEIDELBERG, BERLIN, HEIDELBERG, PAGE(S) 776 - 778, XP019137921, ISBN: 978-3-642-11300-0 abstract; figures 1-2 paragraph [0002] - paragraph [0003]**

• **CHEN YUXIN ET AL: "iLike: Bridging the Semantic Gap in Vertical Image Search by Integrating Text and Visual Features", IEEE TRANSACTIONS ON KNOWLEDGE AND DATA ENGINEERING, IEEE SERVICE CENTER, LOS ALAMITOS, CA, US, vol. 25, no. 10, 1 October 2012 (2012-10-01), pages 2257-2270, XP011524701, ISSN: 1041-4347, DOI: 10.1109/TKDE.2012.192 [retrieved on 2013-08-21]**

• **JAEKYONG JEONG ET AL: "An efficient method of image identification by combining image features", UBIQUITOUS INFORMATION MANAGEMENT AND COMMUNICATION, ACM, 2 PENN PLAZA, SUITE 701 NEW YORK NY 10121-0701 USA, 15 February 2009 (2009-02-15), pages 607-611, XP058132985, DOI: 10.1145/1516241.1516348 ISBN: 978-1-60558-405-8**

**EP 3 028 184 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## CROSS REFERENCE TO OTHER APPLICATIONS

## FIELD OF THE INVENTION

The present application relates to a method and system for searching images.

## BACKGROUND OF THE INVENTION

As the amount of image data information on the Internet grows, user demand for searching online images continues to increase. This growth in image searching has given rise to various Web-based image search engines. Image searching is performed through specialized search engine systems that, by searching image text or visual features, provide users with appropriate graphic/image material search services online.

Image search engines can be divided based on scope of image searches into two main categories: comprehensive image searches and vertical image searches. The comprehensive image searches are similarity searches conducted over Internet-wide images. The vertical image searches are searches that primarily target some categories (such as apparel, shoes, and other such products). Currently, on-site image search engines in specialized websites such as e-commerce transaction platforms primarily fall within the category of vertical image searches. For the specialized websites, searches are conducted using query images uploaded by users, and images of same or similar business objects are returned.

Initially, specialized website on-site image searches typically use an image from the website's own database to serve as a query image for the search. For example, an image database of an e-commerce transaction platform stores images of many business objects uploaded by seller-users and also stores category information associated with business objects corresponding to each image as well as corresponding style information (the style information including color, shape, etc.) and other such image information. The user selects an image of one of the uploaded business objects to serve as a query image. In this way, the on-site search engine can conduct searches based on the category information and corresponding style information (color, shape, etc.) and other such image information of the query image, and return images of business objects that are the same as or highly similar to the query image.

With this approach, obtaining relatively good search results is possible. However, in the case of images external to the on-site image database (e.g., images taken by users in everyday life with their cell phones), search result image similarities and recall rates are relatively poor because obtaining descriptive information relating to the query image in advance is not possible. Of course, to obtain better search results, the system could request that users also provide category, style information, and other descriptive information associated with the main content in the query image when inputting query images. However, the search results would rely heavily on the descriptive information input by users. From a point of view of the users, the search process could become cumbersome, and since the users might not know the definitions of various categories in the website image databases, the inputted descriptive information may not necessarily be accurate. Accordingly, incorrect search results may be returned.

US 2005 162523 describes a mobile device including a camera to capture an image and a wireless handheld device, coupled to the camera and to a wireless network, to communicate the image with existing databases to find similar images. The mobile device further includes a processor, coupled to the device, to process found database records related to similar images and a display to view found database records that include web pages including images.

The invention is defined in the claims.

## BRIEF DESCRIPTION OF THE DRAWINGS

Various embodiments of the invention are disclosed in the following detailed description and the accompanying drawings.

In order to provide a clearer explanation of the technical solutions in the prior art or in embodiments of the present application, simple introductions are given below to the drawings that are needed for the embodiments. Obviously, the drawings described below are merely some embodiments of the present application. Persons with ordinary skill in the art could, without expending creative effort, obtain other drawings on the basis of these drawings.

FIG. 1A is a flowchart of an embodiment of a process for searching images.

FIG. 1B is a flowchart of an embodiment of a process for extracting features.

FIG. 1C is a flowchart of an embodiment of a process for determining a similarity of visual features of a query image and visual features of each image in an image database.

FIG. 2 is a flowchart of an embodiment of a process for acquiring image text information.

FIG. 3A is a diagram of an embodiment of a device for searching images.

FIG. 3B is a diagram of an embodiment of a feature extracting unit.

FIG. 4 is a diagram of an embodiment of a device for acquiring image text information.

FIG. 5 is a diagram of an embodiment of a system for searching images.

FIG. 6 is a functional diagram illustrating an embodiment of a programmed computer system for searching images.

FIG. 7 is an example of an image to be having features extracted.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

In some embodiments, when conducting an image search, images not in the website image database can be used as query images. An example of a query image includes a picture taken with a user's cell phone, a picture from another website or a local file folder, etc. Moreover, manually designating category information or descriptive information (e.g., product attributes, keywords, main colors, and other such style information) for the query image is not required. Regarding the search engine, after the search engine receives the query image input by the user, the search engine can first determine a category to which the query image could belong. In addition, the search engine can also determine descriptive information for the query image, and then provide the user with search results based on the descriptive information.

In some embodiments, a method used to determine category information, descriptive information, or a combination thereof associated with query images includes: comparing a query image to images in a database, the images in the database themselves including category information and descriptive information associated with the images in the database. Therefore, if some images similar to the query image are found in the database, a category associated with the current query image can be determined based on the category information associated with these images found in the database. Subsequently, determining descriptive information for the current query image is also possible.

Looking up images in the database that are similar to the current query image can be performed as follows: the server can first extract visual features from each image in the image database to offline and store the extracted visual features corresponding to the each image in the image database. In some embodiments, the server extracts visual features from each image and stores the visual features corresponding to the each image in the database so that when a user inputs a query image, the server likewise extracts visual features from the query image and then compares the extracted visual features of the query image to the visual features of each image in the database to find images similar to the query image. Of course, a specific image can have a background and other content in addition to the main content, yet only the main content can include content that the image primarily displays. For example, the main intent of a certain image is to present a piece of clothing. In this example, only a torso of a person in the certain image belongs to a main content zone of the image. Therefore, in some embodiments, before the visual features are extracted from each image, the server may first detect a main content zone of each image and then extract the visual features from the main content zone. Thus, accuracy of similarity determinations is not to be affected by image backgrounds.

Embodiments in which main content zones are detected and which specific visual features are extracted are to be described below. In e-commerce transaction platforms, the images in the image database are typically images of business objects (e.g., merchandise) uploaded by seller-users, and the seller-users may upload a plurality of images for the same business object, with one of the uploaded images being a primary image. In some embodiments, visual feature extraction can be limited to the primary image of a business object. In addition, since many seller-users within a system exist, and the seller-users are always uploading new business object images, feature extraction can be performed on primary images of new business objects added to the database each day (or a different period of time). Of course, since all of these primary images were uploaded by users, some image quality (pixels, resolution, etc.) may not satisfy various requirements. Examples of requirements include a stored image being too small (e.g., images smaller than 200x200 pixels), image quality being poor (e.g., images captured by mobile phone of a computer screen), and some of the main products not being pronounced (e.g., images include non-product information in addition to the products themselves). Therefore, the system can also predetermine image quality and then detect main content zones and extract visual features. In this embodiment, the system can periodically (e.g., daily) push computed image features into online distributed image databases to be used to determine query image categories. The pushed computed image features can also be used for subsequent searches.

Thus, after a user uploads a query image, the system can first extract visual features from the query image and input the extracted query image visual features into an online, real-time analyzer. This online, real-time analyzer can determine a category based on the corresponding visual features of the query image and can also extract style and other such descriptive information corresponding to the deduced category. Then, this information can be used for querying online distributed indices. The result images that are obtained from the query can be ordered according to a certain rule and then sent back to the user. An example of the rule includes comparing the result images with the query image according to image color, shape, and/or pattern, and ranking the results in order of similarity to the query image.

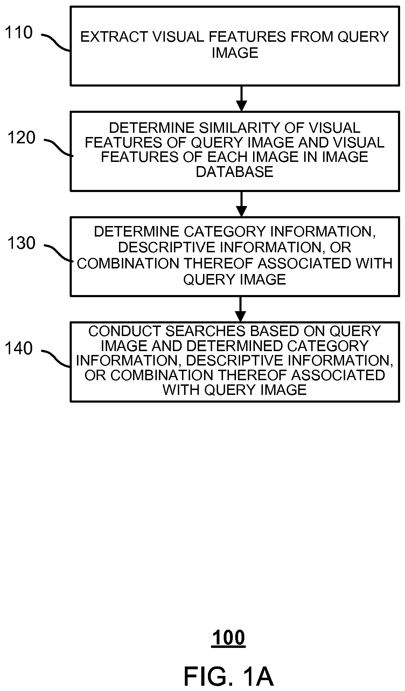

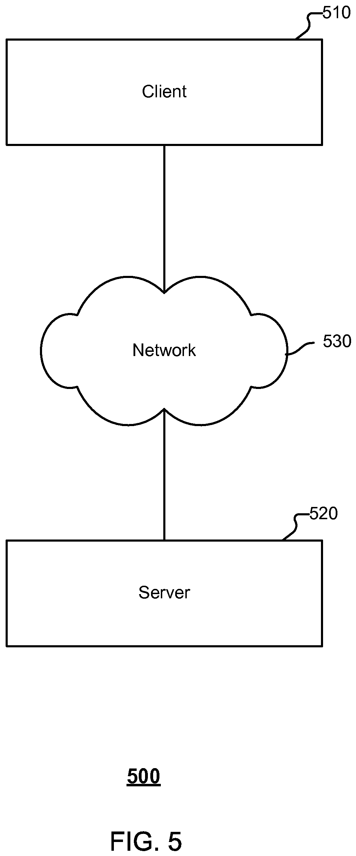

FIG. 1A is a flowchart of an embodiment of a process for searching images. In some embodiments, the process 100 is implemented by a server 520 (shown in FIG. 5) and comprises:

In 110, after receiving an input query image, the server extracts visual features from the query image.

In some embodiments, the visual features extracted from the query image are extracted in the same way that visual features are extracted offline from each image in a database. Moreover, visual feature types also correspond to the visual features. Examples of visual feature types include: scale-invariant feature transforms (SIFTs), color layout descriptors (CLDs), shapes, image contexts, edge histogram descriptors (EHDs), and GIST descriptors. Therefore, the extraction of the visual feature types and the visual features will be explained together.

In some embodiments, the extracted image visual features are global features including a color histogram, a grain, a shape, and other global features of the image. In some embodiments, image similarity calculations and image searches are subsequently performed based on these global features. As an aspect, although such global features are used for global descriptions of images, the global features typically cannot be used to differentiate image details very well. Therefore, in some embodiments, the image is described through a composite global feature (color, edges, etc.) and local feature approach. Examples of local features include: SIFTs, speeded up robust features (SURFs), principal component analysis-SIFTs (PCA-SIFTs), affine-SIFTs (ASIFTs), and gradient location and orientation histograms (GLOHs). Subsequently, images similar to the query image can be looked up among the images in the database based on these global and local features. Thus, describing the images through the exacted global and local features and increasing determination accuracy are possible. Of course, when accuracy requirements are not relatively high, extracting only either global features or local features is possible.

In some embodiments, the global features include global visual edge features, global color distribution features, or any combination thereof. In some embodiments, the local features include local rotation non-variant features. An example of a local rotation non-variant feature includes SIFTs. An example of a global visual edge feature includes EHDs. An example of a global color distribution feature includes CLDs. In some embodiments, any one piece of visual feature information is extracted from the query image, any two or three pieces of visual feature information are simultaneously extracted from the query image, etc. In other words, no special restriction on the quantity of visual features from the query image that are extracted exists. Even if only one visual feature is extracted from the query image, determining category information and other information associated with the query image are to be attained while reducing usage of storage space. Of course, in the event that all these features are extracted, three different types of features may be extracted from one query image. Similarly, in the case of all the images in a database that are used to establish an index, these three different types of features can also be extracted and stored in the database. Please note that all features, whether global or local, can be extracted based on methods understood by one of ordinary skill in the art and descriptions of the methods are omitted for conciseness.

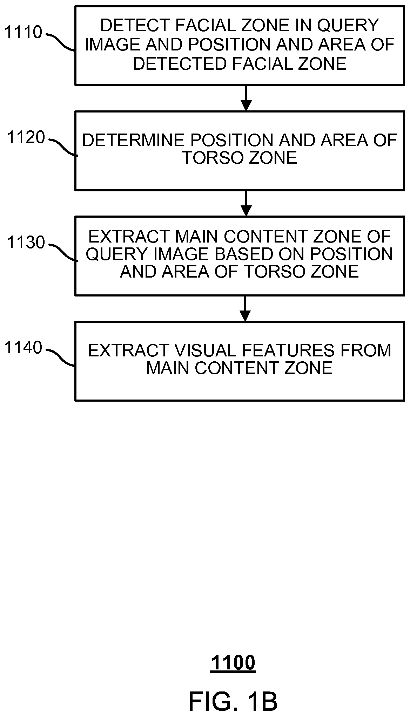

FIG. 1B is a flowchart of an embodiment of a process for extracting features. In some embodiments, the process 1100 is an implementation of operation 110 of FIG. 1A and comprises:

In 1110, the server detects a facial zone in a query image and a position and area of the detected facial zone, based on face detection technology. Face detection refers to, for any given image, determining whether there is a human face and provides a location and size of the human face. Examples of face detection techniques include using skin color and/or motion detection.

In 1120, the server determines a position and area of a torso zone based on the position and area of the facial zone and a preset facial zone-to-torso zone ratio.

In 1130, the server extracts the main content zone of the query image based on the position and area of the torso zone.

Accordingly, determination and search accuracy are increased. In some embodiments, the server can use methods such as an image segmentation and saliency detection, Otsu's method, and graph cut to perform the extraction of the main content zone. Such methods depend on image color distribution information and involve relatively large computation loads. The methods for detecting the main content zones can affect system performance. Moreover, when the image scenes are complex, the methods for detecting the main content zones may not be able to accurately separate the main content zone, with negative consequences for subsequent processing. For example, the query image has apparel exhibited by a model as main content. In this example, human face detection can be used to determine the main content zone of the image.

In 1140, the server extracts visual features from the main content zone.

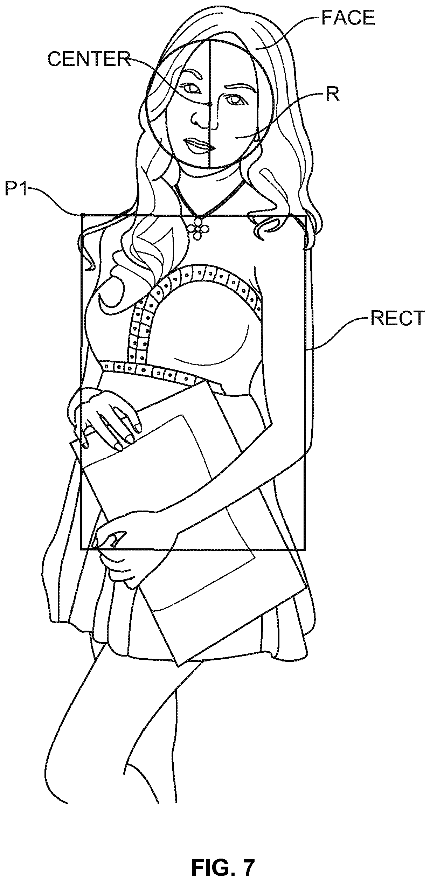

FIG. 7 is an example of an image to be having features extracted. In the example, the server first performs facial detection on the input image (which can be a query image or an image in the database). In the event that the server detects a human face, the server obtains a round facial zone and center point coordinates, center(x, y) of the round facial zone. In the event that the server fails to detect the human face, the server outputs the entire image as an apparel main zone.

Next, it is known a priori that a human torso can be viewed as a rectangular zone (Rect) and that a length and width of the rectangular zone (Rect) are proportionally related to a diameter (R) of the round facial zone. The length and width of Rect can be obtained from this relationship. For example, the following parameters can be determined based on actual conditions:

$$\text{Length} = 3.5*R;$$

and

$$\text{Width} = 2.5*R.$$

Thus, with the center coordinates (x,y) of the facial zone and the length and width of the rectangular zone (Rect), the server can obtain a point P1(x,y) of the upper left corner of the torso rectangular zone. Moreover, the server can obtain the corresponding coordinates of the apparel main zone based on the point P1(x,y) and the length and width of Rect.

Referring back to FIG. 1A, in 120, the server determines a similarity of the visual features of the query image and visual features of each image in an image database.

After obtaining the visual features of the query image, the server can pre-extract the visual features from the images in the database. Therefore, the server can determine the similarity of the visual features of the query image and the visual features of each image in the image database. In the event that only one type of visual feature is extracted and the specific visual feature typically is expressed with a vector of a certain dimension, the similarity between the two images can be expressed directly in terms of a calculated inter-vector distance. In one example, the inter-vector distance is calculated based on a Euclidean distance between two vectors, each vector representing an image. In some embodiments, a plurality of visual features of different types could be extracted from the same image. For example, the visual features of the image include both global features and local features, and many kinds of global features exist, etc. In such situations where many different types of visual features exist, in the event that the similarity between two images is to be calculated, typically the calculation can be based on a classifier. In other words, a batch of training samples is manually selected to train a classifier model. Examples of classifier models include linear classifiers, Bayesian classifiers, neural networks, support vector machines (SVMs), etc. Subsequently, various visual features of the query image are input into the classifier, which outputs categories associated with the query image. As an aspect, such an approach typically has the following limitations:

First, labor costs associated with the manual selection of training samples can be excessive, and the selection process can be subjective, with negative consequences for the training of the classifier model.

Second, in an actual system, sample distributions often exhibit large nonuniformities, which are manifested in the fact that some categories have relatively more samples while other categories have relatively fewer samples. Such inequalities in the distribution of samples can have a large impact on the classifier training process. Consequently, the classifier model that is ultimately trained cannot differentiate different kinds of samples or images very well.

Third, a large volume of image data within image databases exists. Moreover, scenes in the images can be highly complex. Therefore, selecting a quantity of training samples can involve difficulties: in the event that a relatively smaller number of training samples is selected, the server cannot describe the various types of samples very well. In the event that a relatively larger number of training samples is selected, a classifier model is presented with a relatively more challenging situation because more resources are to be used to build the classifier.

Fourth, after a classifier-based object category determination system is officially online, the classifier model is to be periodically updated, and the system again involves re-selecting training samples. The overall process uses up a significant amount of resources and rapid, real-time system updating is not convenient.

In view of the above limitations involved in using the classifier to determine categories, some embodiments provide a cascade-type re-search image similarity calculation method. In other words, the server performs cascade-type, layered calculations based on a preset sequence of various types of visual features, in performing each layer's calculations, the similarity determination being based only on one type of feature in the query image, and inputting an image set complying with preconditions within the layer to the next layer to perform similarity determinations based on a next type of feature.

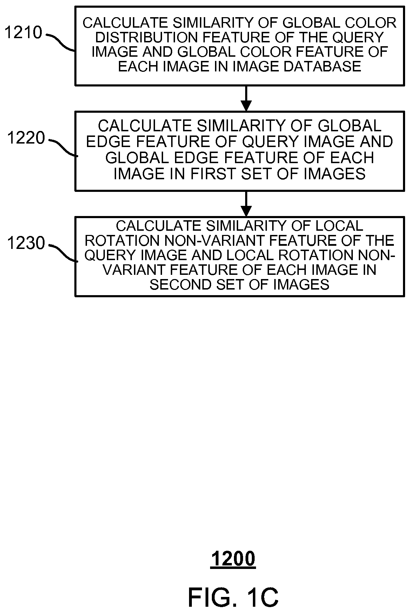

For example, suppose that a query image includes three different types of visual features: global edge features, global color distribution features, and local rotation non-variant features. In addition, each image in the image database has visual features of the above three types. Moreover, suppose that a preset sequence of the various visual features is: global color distribution feature, global edge feature, and local rotation non-variant feature. FIG. 1C is a flowchart of an embodiment of a process for determining a similarity of visual features of a query image and visual features of each image in an image database. In some embodiments, the process 1200 is an implementation of 120 of FIG. 1A and comprises:

> In 1210, the server calculates a similarity of a global color distribution feature of a query image and a global color feature of each image in the image database based on a first similarity measurement technique, and selects a first set of images, each image of the first set of images having a similarity to the query image exceeding a first threshold.

> In 1220, the server calculates a similarity of a global edge feature of the query image and a global edge feature of each image in the first set of images based on a second similarity measurement technique, and selects a second set of images among the first set of images, each image of the second set of images having a similarity to the query image exceeding a second threshold.

> In 1230, the server calculates a similarity of a local rotation non-variant feature of the query image and a local rotation non-variant feature of each image in the second image set using a third similarity measurement technique, and selects a third set of images among the second set of images, each image of the third set of images having a similarity to the query image exceeding a third threshold.

In other words, the determination in each of the above operations is based on the visual features of one type. In addition, each of the above operations is configured to filter out some images. The image set that is obtained in operation 1230 is a set of images where each image is similar to the query image for all types of the visual features. The above process 1200 corresponds to a cascade-type determination. The corresponding similarity measurement technique in each operation therein may be the same or different from each other. In other words, different types of visual features can have different similarity measurement techniques. In some embodiments, inter-vector distances are used as a similarity measurement technique. For example, Euclidean computations are used to calculate a distance between two vectors where the smaller the distance, the greater the similarity. Please note that the comparison sequences for the global color distribution feature, the global edge feature, and the rotation non-variant feature can vary in various embodiments.

This cascade-type determination method differs from the classifier training method as follows:

> First, the cascade-type determination method requires neither any training samples nor the traditional classifier training process. The cascade-type determination method can conserve large amounts of system resources and resources used during classifier re-training.

> Second, the cascade-type determination method conducts similarity determinations layer-by-layer. A different type of image feature is used in each layer to obtain a set of images that are most similar to the query image regarding one visual feature. The obtained set is used in the next level, which undergoes further screening.

> Third, the cascade-type determination method only calculates a single image feature in an offline operation. All subsequent feature calculations are real-time calculations. System storage strain and computational resources involved in this process are less than the technique of subjecting different image features to a one-time calculation and then combining the results.

> Fourth, since the cascade-type determination method does not require the traditional machine learning classifier training process, the cascade-type determination method is scalable, and can be expanded to more categories for searching.

In 130, the server determines the category information, the descriptive information, or a combination thereof associated with the query image based on category information, descriptive information, or a combination thereof of business objects corresponding to the images having a similarity to the query image that complies with a precondition. An example of the precondition includes a predefined threshold. An example of a category determination technique includes ranking the categories based on the number of appearances of a business object in a category and outputting the category having the highest number of appearances of the business object.

For example, after obtaining a set of images visually similar to the query image, the server determines a category associated with the current query image based on the categories associated with each image stored in the image database. As an example, the server determines the categories corresponding to each image having a similarity that complies with a precondition based on the category information of all the images stored in the image database and then determines a category with the highest occurrence frequency to be a category associated with the query image. For example, the server determines that there are ten images most similar to the query image. Of the ten images, five images belong to the category A, two images belong to the category B, two images belong to the category C, and one image belongs to the category D. Therefore, the server determines that the current query image belongs to the category A. Of course, in some embodiments, other well-known decision-making methods such as a decision tree analysis can be employed.

Next, after the server determines the category associated with the query image, the server can also determine descriptive information for the query image. As an example, the server extracts descriptive information on images corresponding to the category having the highest occurrence frequency among the images having the similarity that complies with the precondition, and based on an analysis of the descriptive information of these images, the server determines descriptive information of the current query image. For example, in the above example, after the server determines that the query image is associated with category A, the server selects the five images corresponding to the category A. Then, after performing word segmentation based on titles and other textual descriptive information of the five images, the server analyzes and ultimately selects some keywords as the descriptive information for the query image.

Of course, in some embodiments, the query image descriptive information can be determined through other approaches. The descriptive information not required to be determined after the category information of the query image is determined. In addition, the server can also determine either the category information or the descriptive information for the query image and then provide search results to the user based on one or the other information. Of course, if the server determines information relating to both category information and descriptive information, the quality of the search results should be higher.

In 140, the server conducts searches based on the query image and the determined category information, the descriptive information, or a combination thereof associated with the query image, and returns search results.

After determining the category information, the descriptive information, or a combination thereof associated with the query image, the server acquires related search results in the image database based on the determined information. The search process can be the same as that of the user submitting a query image as well as category information and descriptive information. For example, the server first searches the image database for all the business objects of the category information associated with the query image. Then, the server performs a similarity determination of the query image descriptive information and the title of each business object. The server then compares the images of those business objects having a similarity that complies with a precondition to the image features of the query image, and sends the obtained search results back to the user.

In summary, in some embodiments, in the event that the user conducts an image search, the user simply submits a query image without having to also submit other information such as category and descriptive information associated with the query image. Moreover, the submitted query image can be any image external to the image database. After receiving the query image, the server can first determine the category, the descriptive information, or a combination thereof associated with the query image based on features of the query image and then obtain, as the search results, based on the query image and the category, the descriptive information, or a combination thereof, a set of images having a same category as a category associated with the query image and similar in terms of visual features such as style and color. Thus, the server can provide the user with search results without requiring the user to provide category or descriptive information. Moreover, the category and descriptive information that the server determines by comparing query image features is more objective and accurate and can eliminate reliance on information input by the user.

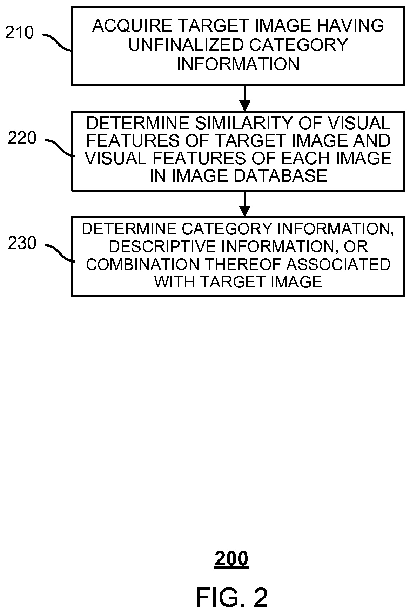

In the above image search method, determining the category and descriptive information associated with an image is described. In an example, when uploading business objects on an e-commerce transaction platform, a seller-user is to select the corresponding category. As an aspect, category relationships are complex, and the seller-user can make an incorrect selection. At the same time, some seller-users may intentionally provide incorrect categories to perpetrate search fraud or achieve some other objective. But in the event that the server determines the category associated with the image of a business object uploaded by a user, the seller does need to manually select a category, thus simplifying the seller-user's category selection process and increasing user satisfaction. In the event that the user does select a category, the system can also perform a category determination. In the event that the determined category is entirely unrelated to the category selected by the user, the server can send an alert to the system administrator, or the server can reject the user's submission, etc. This approach can prevent seller-users from perpetrating fraud via text. Therefore, in some embodiments, protection is individually provided with the method whereby the server automatically determines the text information associated with an image. FIG. 2 is a flowchart of an embodiment of a process for acquiring image text information. In some embodiments, the process 200 is implemented by a server 520 of FIG. 5 and comprises:

In 210, the server acquires a target image having unfinalized category information, and extracts visual features of the target image. An example of an unfinalized category information includes an image taken by a user's smartphone (in this scenario, category information of the image is unknown or unfinalized).

As an example, the target image here refers to a query image submitted by a user conducting an image search, as described above, or the target image is an image of a business object submitted by a seller-user, etc. In some embodiments, the feature extraction is the same as the above feature extraction, with extraction of global features, local features, or a combination thereof from the target image.

In 220, the server determines a similarity of the visual features of the target image and visual features of each image in an image database.

In this example, the image database is similar to the above image database. Features can be extracted offline from images with known categories and descriptive information in the database and stored in the database. Also, many different types of features can be extracted from the same image in the database. Therefore, after the features of the target image are obtained, the server can determine their similarity to the features of each image in the image database. Similarly, if one image corresponds to many different types of features, then the server can proceed based on the above cascade-type determination method.

In 230, the server determines category information, descriptive information, or a combination thereof associated with the target image based on the category information, the descriptive information, or a combination thereof of business objects corresponding to images having a similarity to the target image that complies with a precondition.

After the server identifies a certain number of images in the database that are most similar to the current target image, the server determines category information associated with the target image based on the category information of these most similar images. In addition, the server can also determine the descriptive information for the target image. For example, after the category information of the image is determined, the system can search for products based on the category information rather than the entire image database of the whole system, which reduces error rates.

In summary, with the above-described process 200 for acquiring image text information, the server can automatically determine the category information, the descriptive information, or a combination thereof associated with the target image submitted by a user that is based on the visual features of the target image and visual features of images in a database. Thus, in applications using the target image text information, users are no longer required to manually input text information. Even in the event that a user inputs the text information, the user-input information can be authenticated based on determined information to avoid fraud.

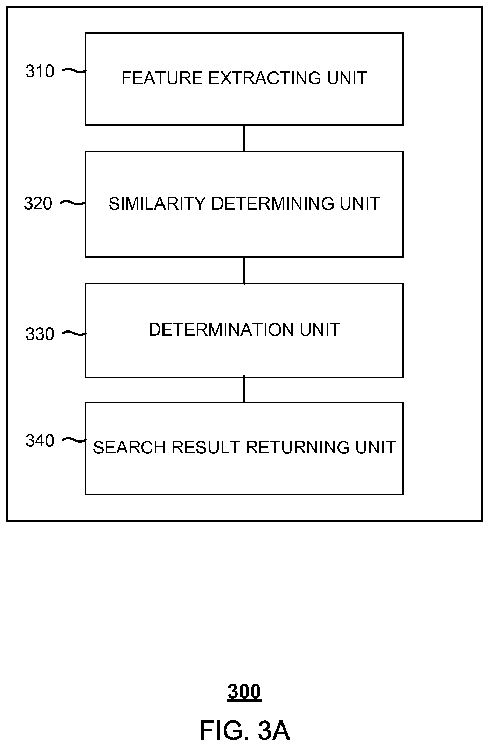

FIG. 3A is a diagram of an embodiment of a device for searching images. In some embodiments, the device 300 implements process 100 of FIG. 1A and comprises: a feature extracting unit 310, a similarity determining unit 320, a determination unit 330, and a search result returning unit 340.

In some embodiments, after receiving an inputted query image, the feature extracting unit 310 extracts visual features from the query image.

In some embodiments, the similarity determining unit 320 determines a similarity of the visual features of the query image and visual features of each image in an image database.

In some embodiments, the determination unit 330 determines category information, descriptive information, or a combination thereof associated with the query image based on category information, descriptive information, or a combination thereof of business objects corresponding to images having a similarity to the query image that complies with a precondition.

In some embodiments, the search result returning unit 340 conducts searches based on the query image and the category information, the descriptive information, or a combination thereof associated with the query image, and returns search results.

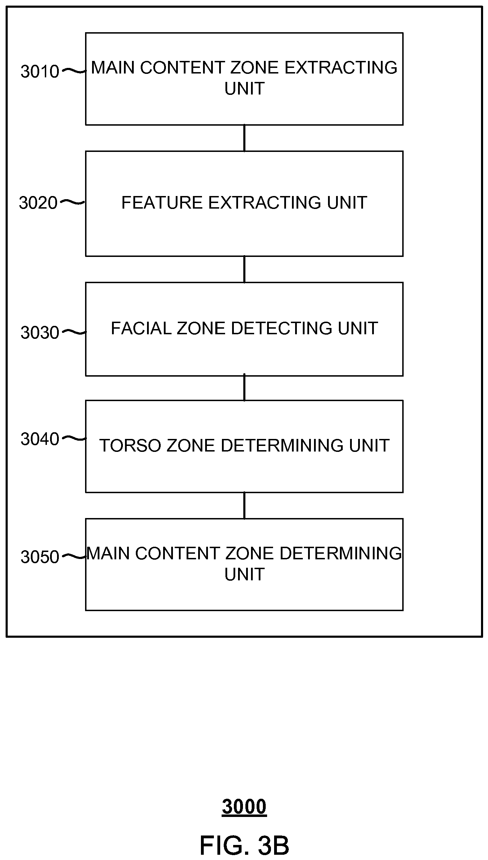

FIG. 3B is a diagram of an embodiment of a feature extracting unit. In some embodiments, the feature extracting unit 3000 corresponds to the feature extracting unit 310 of FIG. 3A.

In some embodiments, in order to avoid interference from image backgrounds and other elements during similarity determination, the feature extracting unit 3000 comprises: a main content zone extracting unit 3010 and a feature extracting unit 3020.

In some embodiments, the main content zone extracting unit 3010 extracts a main content zone from a query image.

In some embodiments, the feature extracting unit 3020 extracts features from the main content zone.

In some embodiments, in the event that a main content of the query image is apparel-type content, the feature extracting unit 3000 further comprises: a facial zone detecting unit 3030, a torso zone determining unit 3040, and a main content zone determining unit 3050.

In some embodiments, the facial zone detecting unit 3030 detects a facial zone in the query image and detects a position and area of the detected facial zone, based on face detection technology.

In some embodiments, the torso zone determining unit 3040 determines a position and area of a torso zone based on the position and area of the facial zone and a preset facial zone-to-torso zone proportion.

In some embodiments, the main content zone determining unit 3050 extracts the main content zone from the query image based on the position and area of the torso zone.

Referring back to FIG. 3A, in some embodiments, when extracting the visual features of the query image, the feature extracting unit 310 extracts global features, local features, or a combination thereof from the query image.

In some embodiments, the global features include global visual edge features, global color distribution features, or a combination thereof, and the local features include local rotation-invariant features.

In some embodiments, in the event that at least two kinds of extracted features exist, the similarity determining unit 320 performs cascade-type, layered calculations based on a preset sequence of various features. In some embodiments, in performing calculations of each layer, similarity determinations are based only on one feature therein. Furthermore, the similarity determining unit 320 inputs an image set complying with a precondition within a layer into a next layer to perform similarity determination based on the next feature.

In some embodiments, the determination unit 330 determines a category corresponding to each image having a similarity that complies with a precondition based on the category information of all the images stored in an image database, and determines a category having the greatest occurrence frequency as the category information associated with the query image.

In some embodiments, the feature extracting unit 310 extracts descriptive information on the image corresponding to a category having the highest occurrence frequency among the images having a similarity that complies with a precondition, and through analysis of this descriptive information, the feature extracting unit 310 acquires the descriptive information of the query image.

In summary, in some embodiments, in the event that the user is to conduct an image search, the user submits a query image without having to also submit other information such as category and descriptive information associated with the query image. Moreover, the submitted query image can be any image external to the image database. After receiving the query image, the server can first determine category information, descriptive information, or a combination thereof associated with the query image based on features of the query image and then, in light of the query image and the category information, the descriptive information, or a combination thereof jointly obtain as the search results a set of images having the same category as the category associated with the query image and being similar in terms of visual features such as style and color. Thus, the server can provide the user with search results without requiring the user to provide category or descriptive information. Moreover, the category and descriptive information that the server determines by comparing query image features is more objective and accurate and can eliminate reliance on information input by the user.

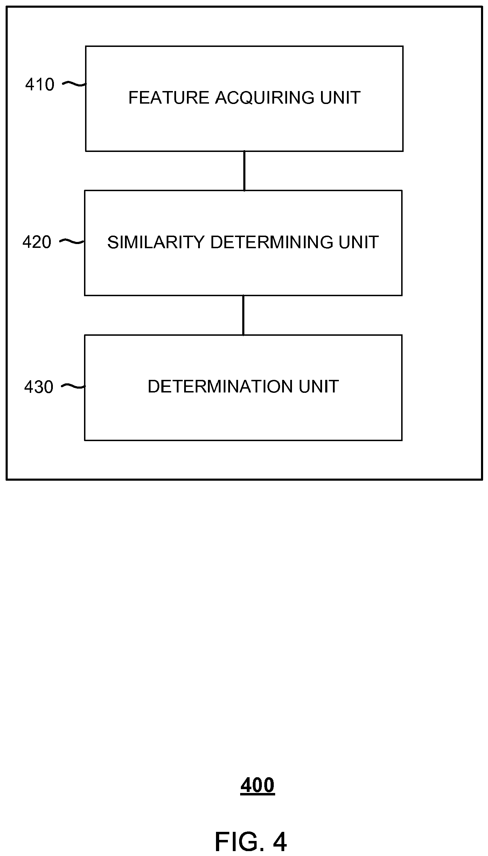

FIG. 4 is a diagram of an embodiment of a device for acquiring image text information. In some embodiments, the device 400 implements the process 200 of FIG. 2 and comprises: a feature acquiring unit 410, a similarity determining unit 420, and a determination unit 430.

In some embodiments, the feature acquiring unit 410 acquires a target image of unfinalized category information and extracts visuals features from the target image.

In some embodiments, the similarity determining unit 420 determines a similarity of the visual features of the target image and visual features of each image in an image database.

In some embodiments, the determination unit 430 acquires category information, descriptive information, or a combination thereof associated with the target image based on category information, descriptive information, or a combination thereof of business objects corresponding to images having a similarity to the target image that complies with a precondition.

In some embodiments, the determination unit 430 determines category information corresponding to each image having a similarity that complies with a precondition based on the category information of each image stored in the image database, and determines a category with the greatest occurrence frequency as the category information associated with the query image.

With the above-described device 400 for acquiring image text information, the device 400 can automatically determine the category information, the descriptive information, or a combination thereof associated with the target image submitted by a user that is based on visual features of the target image and the visual features of the images in the database. Thus, in applications that use target image text information, users are no longer required to manually input text information. Even if a user inputs text information, the user-input information can be authenticated based on determined information to avoid such phenomena as the perpetration of fraud.

FIG. 5 is a diagram of an embodiment of a system for searching images. In some embodiments, the system 500 includes a server 520 for searching images connected to a client 510 via a network 530. The client 510 inputs query images to the server 520 to be used for searching images in the server 520.

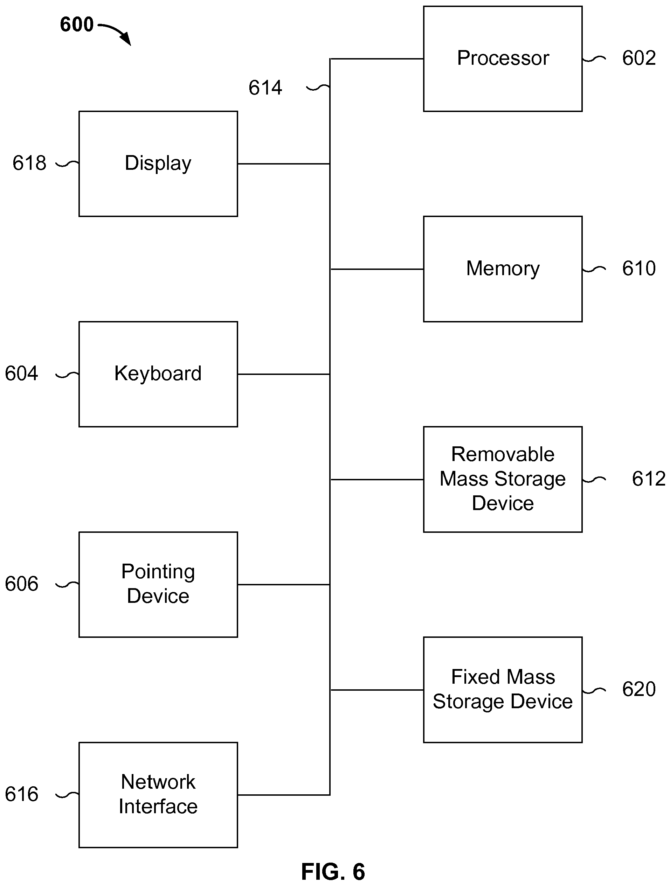

FIG. 6 is a functional diagram illustrating an embodiment of a programmed computer system for searching images. As will be apparent, other computer system architectures and configurations can be used to search images. Computer system 600, which includes various subsystems as described below, includes at least one microprocessor subsystem (also referred to as a processor or a central processing unit (CPU)) 602. For example, processor 602 can be implemented by a single-chip processor or by multiple processors. In some embodiments, processor 602 is a general purpose digital processor that controls the operation of the computer system 600. Using instructions retrieved from memory 610, the processor 602 controls the reception and manipulation of input data, and the output and display of data on output devices (e.g., display 618).

Processor 602 is coupled bi-directionally with memory 610, which can include a first primary storage, typically a random access memory (RAM), and a second primary storage area, typically a read-only memory (ROM). As is well known in the art, primary storage can be used as a general storage area and as scratch-pad memory, and can also be used to store input data and processed data. Primary storage can also store programming instructions and data, in the form of data objects and text objects, in addition to other data and instructions for processes operating on processor 602. Also as is well known in the art, primary storage typically includes basic operating instructions, program code, data, and objects used by the processor 602 to perform its functions (e.g., programmed instructions). For example, memory 610 can include any suitable computer-readable storage media, described below, depending on whether, for example, data access needs to be bi-directional or uni-directional. For example, processor 602 can also directly and very rapidly retrieve and store frequently needed data in a cache memory (not shown).

A removable mass storage device 612 provides additional data storage capacity for the computer system 600, and is coupled either bi-directionally (read/write) or uni-directionally (read only) to processor 602. For example, storage 612 can also include computer-readable media such as magnetic tape, flash memory, PC-CARDS, portable mass storage devices, holographic storage devices, and other storage devices. A fixed mass storage 620 can also, for example, provide additional data storage capacity. The most common example of mass storage 620 is a hard disk drive. Mass storage 612, 620 generally store additional programming instructions, data, and the like that typically are not in active use by the processor 602. It will be appreciated that the information retained within mass storage 612 and 620 can be incorporated, if needed, in standard fashion as part of memory 610 (e.g., RAM) as virtual memory.

In addition to providing processor 602 access to storage subsystems, bus 614 can also be used to provide access to other subsystems and devices. As shown, these can include a display monitor 618, a network interface 616, a keyboard 604, and a pointing device 606, as well as an auxiliary input/output device interface, a sound card, speakers, and other subsystems as needed. For example, the pointing device 606 can be a mouse, stylus, track ball, or tablet, and is useful for interacting with a graphical user interface.

The network interface 616 allows processor 602 to be coupled to another computer, computer network, or telecommunications network using a network connection as shown. For example, through the network interface 616, the processor 602 can receive information (e.g., data objects or program instructions) from another network or output information to another network in the course of performing method/process steps. Information, often represented as a sequence of instructions to be executed on a processor, can be received from and outputted to another network. An interface card or similar device and appropriate software implemented by (e.g., executed/performed on) processor 602 can be used to connect the computer system 600 to an external network and transfer data according to standard protocols. For example, various process embodiments disclosed herein can be executed on processor 602, or can be performed across a network such as the Internet, intranet networks, or local area networks, in conjunction with a remote processor that shares a portion of the processing. Additional mass storage devices (not shown) can also be connected to processor 602 through network interface 616.

An auxiliary I/O device interface (not shown) can be used in conjunction with computer system 600. The auxiliary I/O device interface can include general and customized interfaces that allow the processor 602 to send and, more typically, receive data from other devices such as microphones, touch-sensitive displays, transducer card readers, tape readers, voice or handwriting recognizers, biometrics readers, cameras, portable mass storage devices, and other computers.

The computer system shown in FIG. 6 is but an example of a computer system suitable for use with the various embodiments disclosed herein. Other computer systems suitable for such use can include additional or fewer subsystems. In addition, bus 614 is illustrative of any interconnection scheme serving to link the subsystems. Other computer architectures having different configurations of subsystems can also be utilized.

The units described above can be implemented as software components executing on one or more general purpose processors, as hardware such as programmable logic devices and/or Application Specific Integrated Circuits designed to perform certain functions or a combination thereof. In some embodiments, the units can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The units may be implemented on a single device or distributed across multiple devices. The functions of the units may be merged into one another or further split into multiple sub-units.

The methods or algorithmic steps described in light of the embodiments disclosed herein can be implemented using hardware, processor-executed software modules, or combinations of both. Software modules can be installed in random-access memory (RAM), memory, read-only memory (ROM), electrically programmable ROM, electrically erasable programmable ROM, registers, hard drives, removable disks, CD-ROM, or any other forms of storage media known in the technical field.

Although the foregoing embodiments have been described in some detail for purposes of clarity of understanding, the invention is not limited to the details provided. There are many alternative ways of implementing the invention. The disclosed embodiments are illustrative and not restrictive.

**Claims**

1. A method for searching images, comprising:

   receiving an input query image;
   extracting (110) visual features from the input query image;
   determining similarities (120) of the visual features of the query image and visual features of images in an image database, comprising:

   calculating the similarities of the visual features of the query image and the visual features of the images based on a global color distribution (1210) of the query image and global color distributions of the images to obtain a first set of images, wherein an image of the first set of images has a similarity to the query image exceeding a first threshold;
   calculating a similarity of a global edge feature of the query image and a global edge feature of images in the first image set to obtain a second set of images, wherein an image of the second set of images has a s similarity to the query image exceeding a second threshold; and
   calculating a similarity of a local rotation invariant feature of the query image and a local rotation invariant feature of images in the second image set to obtain a third set of images, wherein an image of the third set of images has a similarity to the query image exceeding a third threshold;

   determining (130) category information, descriptive information, or a combination thereof associated with the query image based on category information, descriptive information, or a combination thereof of business objects corresponding to images of the third set of images;
conducting searches (140) of the image database based on the query image and the category information, the descriptive information, or a combination thereof associated with the query image; and
returning search results.

2. The method as described in claim 1, wherein the extracting (110) of the visual features from the input query image comprises:

   extracting (1130) a main content zone from the query image; and
   extracting (1140) visual features from the main content zone.

3. The method as described in claim 2, further comprising:
   determining content type of main content of the query image, wherein in the event that the main content of the query image is apparel-type content, the extracting of the main content zone from the query image comprises:

   detecting (1110) a facial zone of the query image and detecting a position and area of the facial zone, based on face detection technology;
   determining (1120) a position and area of a torso zone based on the position and area of the facial zone and a preset facial zone-to-torso zone proportion; and
   extracting (1130) the main content zone from the query image based on the position and area of the torso zone.

4. A system for searching images, comprising:

   at least one processor configured to:

   receive an input query image;
   extract (110) visual features from the input query image;
   determine (120) similarities of the visual features of the query image and visual features of images in an image database, comprising to:
   calculate the similarities of the visual features of the query image and the visual features of the images based on a global color distribution (1210) of the query image and global color distributions of the images to obtain a first set of images, wherein an image of the first set of images has a similarity to the query image exceeding a first threshold;;
calculating a similarity of a global edge feature of the query image and a global edge feature of images in the first image set to obtain a second set of images, wherein an image of the second set of images has a s similarity to the query image exceeding a second threshold; and
calculating a similarity of a local rotation invariant feature of the query image and a local rotation invariant feature of images in the second image set to obtain a third set of images, wherein an image of the third set of images has a similarity to the query image exceeding a third threshold;
determine (130) category information, descriptive information, or a combination thereof associated with the query image based on category information, descriptive information, or a combination thereof of business objects corresponding to images of the third set of images;
conduct searches (140) of the image database based on the query image and the category information, the descriptive information, or a combination thereof associated with the query image; and
return search results; and

a memory coupled to the at least one processor and configured to provide the at least one processor with instructions.

5. The system as described in claim 4, wherein the extracting of the visual features from the input query image comprises to:

extract (1130) a main content zone from the query image; and
extract (1140) visual features from the main content zone.

6. The system as described in claim 8, wherein the at least one processor is further configured to:
determine content type of main content of the query image, wherein in the event that the main content of the query image is apparel-type content, the extracting of the main content zone from the query image further comprises to:

detect (1110) a facial zone on the query image and detect a position and area of the facial zone, based on face detection technology;
determine (1120) a position and area of a torso zone based on the position and area of the facial zone and a preset facial zone-to-torso zone proportion; and
extract (1130) the main content zone from the query image based on the position and area of the torso zone.

7. The method as described in claim 1 or the system as described in claim 4, wherein:
in the event that at least two extracted visual features from the query image exist, the determining of the similarities (220) of the visual features of the query image and the visual features of the images in the image database comprises to:
perform cascade-type, layered calculations according to a preset sequence of various features, the performing of the cascade-type, layered calculations comprising:
perform calculations for each layer, the performing of the calculations for each layer comprises to:

determine a similarity based only on one feature in each layer; and
input an image set into a next layer to determine a similarity based on a next feature in the next layer, each image of the image set complying with a precondition within the each layer.

8. The method as described in claim 1 or the system as described in claim 4, wherein the determining of the category information associated with the query image based on the category information of the images of the third set of images comprises to:

determine categories (230) corresponding to the images of the third set of images based on category information of the images stored in the image database; and
determine a category of the categories with a greatest occurrence frequency as a category associated with the query image.

9. The method or the system as described in claim 8, wherein the determining of the descriptive information associated with the query image comprises to:

extract the descriptive information from an image corresponding to the category with the highest occurrence frequency among the images of the third set of images; and
determine the descriptive information of the query image based on the descriptive information of the image corresponding to the category with the highest occurrence frequency.

10. A method for acquiring image text information, comprising:

acquiring a target image having unfinalized category information;
extracting (110) visual features of the target image;

determining (120) similarities of the visual features of the target image and visual features of images in an image database, comprising:

calculating the similarities of the visual features of the target image and the visual features of the images based on a global color distribution (1210) of the target image and global color distributions of the images to obtain a first set of images, wherein an image of the first set of images has a similarity to the query image exceeding a first threshold;

calculating a similarity of a global edge feature of the query image and a global edge feature of images in the first image set to obtain a second set of images, wherein an image of the second set of images has a s similarity to the query image exceeding a second threshold; and

calculating a similarity of a local rotation invariant feature of the query image and a local rotation invariant feature of images in the second image set to obtain a third set of images, wherein an image of the third set of images has a similarity to the query image exceeding a third threshold; and

determining (130) category information, descriptive information, or a combination thereof associated with the target image based on category information, descriptive information, or a combination thereof of business objects corresponding to images of the third set of images.

11. The method as described in claim 10, wherein the determining of the category information (130) associated with the target image based on the category information of the images of the third set of images comprises:

determining categories corresponding to the images of the third set of images based on category information of the images stored in the image database; and

determining a category of the categories with a greatest occurrence frequency as a category associated with the target image.

12. A system for acquiring image text information, comprising:

at least one processor configured to:

acquire a target image having unfinalized category information;

extract (110) visual features of the target image;

determine similarities (120) of the visual features of the target image and visual features of images in an image database, comprising to:

calculate the similarities of the visual features of the target image and the visual features of the images based on a global color distribution (1210) of the target image and global color distributions of the images to obtain a first set of images, wherein an image of the first set of images has a similarity to the query image exceeding a first threshold;

calculating a similarity of a global edge feature of the query image and a global edge feature of images in the first image set to obtain a second set of images, wherein an image of the second set of images has a s similarity to the query image exceeding a second threshold; and

calculating a similarity of a local rotation invariant feature of the query image and a local rotation invariant feature of images in the second image set to obtain a third set of images, wherein an image of the third set of images has a similarity to the query image exceeding a third threshold; and

determine category information (130), descriptive information, or a combination thereof associated with the target image based on category information, descriptive information, or a combination thereof of business objects corresponding to images of the third set of images; and

a memory coupled to the at least one processor and configured to provide the at least one processor with instructions.

13. The system as described in claim 12, wherein the determining of the category information (130) associated with the target image based on the category information of the images of the third set of images comprises:

determining categories corresponding to the images of the third set of images based on category information of the images stored in the image database; and

determining a category of the categories with a greatest occurrence frequency as a category associated with the target image.

14. A computer program product for searching images, the computer program product being embodied in a tangible non-transitory computer readable storage medium and comprising computer instructions for:

receiving an input query image;

extracting (110) visual features from the input query image;

determining similarities (120) of the visual features of the query image and visual features of images in an image database, comprising:

calculating the similarities of the visual features of the query image and the visual features of the images based on a global color distribution (1210) of the query image and global color distributions of the images to obtain a first set of images, wherein an image of the first set of images has a similarity to the query image exceeding a first threshold

calculating a similarity of a global edge feature of the query image and a global edge feature of images in the first image set to obtain a second set of images, wherein an image of the second set of images has a s similarity to the query image exceeding a second threshold; and

calculating a similarity of a local rotation invariant feature of the query image and a local rotation invariant feature of images in the second image set to obtain a third set of images, wherein an image of the third set of images has a similarity to the query image exceeding a third threshold;

determining category information (130), descriptive information, or a combination thereof associated with the query image based on category information, descriptive information, or a combination thereof of business objects corresponding to images of the third set of images;

conducting searches of the image database based on the query image and the category information, the descriptive information, or a combination thereof associated with the query image; and

returning search results.

15. A computer program product for acquiring image text information, the computer program product being embodied in a tangible non-transitory computer readable storage medium and comprising computer instructions for:

acquiring a target image having unfinalized category information;

extracting (110) visual features of the target image;

determining similarities (120) of the visual features of the target image and visual features of images in an image database, comprising:

calculating the similarities of the visual features of the target image and the visual features of the images based on a global color distribution (1210) of the target image and global color distributions of the images to obtain a first set of images, wherein an image of the first set of images has a similarity to the query image exceeding a first threshold;

calculating a similarity of a global edge feature of the query image and a global edge feature of images in the first image set to obtain a second set of images, wherein an image of the second set of images has a s similarity to the query image exceeding a second threshold; and

calculating a similarity of a local rotation invariant feature of the query image and a local rotation invariant feature of images in the second image set to obtain a third set of images, wherein an image of the third set of images has a similarity to the query image exceeding a third threshold; and

determining category information (130), descriptive information, or a combination thereof associated with the target image based on category information, descriptive information, or a combination thereof of business objects corresponding to images having a similarity to the target image that complies with a first images of the third set of images.

**Patentansprüche**

1. Verfahren zum Suchen von Bildern, umfassend:

Empfangen eines Eingabeanfragebilds;

Extrahieren (110) von visuellen Merkmalen aus dem Eingabeanfragebild;

Bestimmen von Ähnlichkeiten (120) der visuellen Merkmale des Anfragebilds und visueller Merkmale von Bildern in einer Bilddatenbank, umfassend:

Berechnen der Ähnlichkeiten der visuellen Merkmale des Anfragebilds und der visuellen Merkmale der Bilder auf der Basis einer globalen Farbverteilung (1210) des Anfragebilds und globaler Farbverteilungen der Bilder, um einen ersten Satz Bilder zu erhalten, wobei ein Bild des ersten Satzes Bilder eine Ähnlichkeit zu dem Anfragebild aufweist, die eine erste Schwelle übersteigt;

Berechnen einer Ähnlichkeit eines globalen Kantenmerkmals des Anfragebilds und eines globalen Kantenmerkmals von Bildern in dem ersten Bildsatz, um einen zweiten Satz Bilder zu erhalten, wobei ein Bild des zweiten Satzes Bilder eine Ähnlichkeit zu dem Anfragebild aufweist, die eine zweite Schwelle übersteigt; und

Berechnen einer Ähnlichkeit eines lokalen rotationsinvarianten Merkmals des Anfragebilds und eines lokalen rotationsinvarianten Merkmals von Bildern in dem zweiten Bildsatz, um einen dritten Satz Bilder zu erhalten, wobei ein Bild des dritten Satzes Bilder eine Ähnlichkeit zu dem Anfragebild aufweist, die eine dritte Schwelle übersteigt;

Bestimmen (130) von Kategorieinformationen, beschreibenden Informationen oder einer Kombination davon, die mit dem Anfragebild assoziiert sind, auf der Basis von Kategorieinformationen, beschreibenden Informationen oder einer Kombination davon von Geschäftsobjekten, die Bildern des dritten Satzes Bilder entsprechen;

Ausführen von Suchvorgängen (140) in der Bilddatenbank auf der Basis des Anfragebilds und der Kategorieinformationen, der beschreibenden Informationen oder einer Kombination davon, die mit dem Anfragebild assoziiert sind; und

Liefern von Suchergebnissen.

2. Verfahren nach Anspruch 1, wobei das Extrahieren (110) der visuellen Merkmale aus dem Eingabeanfragebild Folgendes umfasst:

Extrahieren (1130) einer Hauptinhaltszone aus dem Anfragebild; und

Extrahieren (1140) von visuellen Merkmalen aus der Hauptinhaltszone.

3. Verfahren nach Anspruch 2, ferner umfassend:

Bestimmen eines Inhaltstyps des Hauptinhalts des Anfragebilds, wobei in dem Fall, dass der Hauptinhalt des Anfragebilds ein Bekleidungstypinhalt ist, das Extrahieren der Hauptinhaltszone aus dem Anfragebild Folgendes umfasst:

Erkennen (1110) einer Gesichtszone des Anfragebilds und Erkennen einer Position und eines Bereichs der Gesichtszone auf der Basis von Gesichtserkennungstechnologie;

Bestimmen (1120) einer Position und eines Bereichs einer Oberkörperzone auf der Basis der Position und des Bereichs der Gesichtszone und einer vorgegebenen Proportion von Gesichtszone zu Oberkörperzone; und

Extrahieren (1130) der Hauptinhaltszone aus dem Anfragebild auf der Basis der Position und des Bereichs der Oberkörperzone.

4. System zum Suchen von Bildern, umfassend:

mindestens einen Prozessor, der für Folgendes konfiguriert ist:

Empfangen eines Eingabeanfragebilds;

Extrahieren (110) von visuellen Merkmalen aus dem Eingabeanfragebild;

Bestimmen (120) von Ähnlichkeiten der visuellen Merkmale des Anfragebilds und visueller Merkmale von Bildern in einer Bilddatenbank, umfassend:

Berechnen der Ähnlichkeiten der visuellen Merkmale des Anfragebilds und der visuellen Merkmale der Bilder auf der Basis einer globalen Farbverteilung (1210) des Anfragebilds und globaler Farbverteilungen der Bilder, um einen ersten Satz Bilder zu erhalten, wobei ein Bild des ersten Satzes Bilder eine Ähnlichkeit zu dem Anfragebild aufweist, die eine erste Schwelle übersteigt;

Berechnen einer Ähnlichkeit eines globalen Kantenmerkmals des Anfragebilds und eines globalen Kantenmerkmals von Bildern in dem ersten Bildsatz, um einen zweiten Satz Bilder zu erhalten, wobei ein Bild des zweiten Satzes Bilder eine Ähnlichkeit zu dem Anfragebild aufweist, die eine zweite Schwelle übersteigt; und

Berechnen einer Ähnlichkeit eines lokalen rotationsinvarianten Merkmals des Anfragebilds und eines lokalen rotationsinvarianten Merkmals von Bildern in dem zweiten Bildsatz, um einen dritten Satz Bilder zu erhalten, wobei ein Bild des dritten Satzes Bilder eine Ähnlichkeit zu dem Anfragebild aufweist, die eine dritte Schwelle übersteigt;

Bestimmen (130) von Kategorieinformationen, beschreibenden Informationen oder einer Kombination davon, die mit dem Anfragebild assoziiert sind, auf der Basis von Kategorieinformationen, beschreibenden Informationen oder einer Kombination davon von Geschäftsobjekten, die Bildern des dritten Satzes Bilder entsprechen;

Ausführen von Suchvorgängen (140) in der Bilddatenbank auf der Basis des Anfragebilds und der Kategorieinformationen, der beschreibenden Informationen oder einer Kombination davon, die mit dem Anfragebild assoziiert sind; und

Liefern von Suchergebnissen; und

einen Speicher, der an den mindestens einen Prozessor gekoppelt ist und konfiguriert ist, Anweisungen für den mindestens einen Prozessor bereitzustellen.

5. System nach Anspruch 4, wobei das Extrahieren der visuellen Merkmale aus dem Eingabeanfragebild Folgendes umfasst:

Extrahieren (1130) einer Hauptinhaltszone aus dem Anfragebild; und
Extrahieren (1140) von visuellen Merkmalen aus der Hauptinhaltszone.

6. System nach Anspruch 5, wobei der mindestens eine Prozessor ferner für Folgendes konfiguriert ist:
Bestimmen eines Inhaltstyps des Hauptinhalts des Anfragebilds, wobei in dem Fall, dass der Hauptinhalt des Anfragebilds ein Bekleidungstypinhalt ist, das Extrahieren der Hauptinhaltszone aus dem Anfragebild ferner Folgendes umfasst:

Erkennen (1110) eines Gesichtszone auf dem Anfragebild und Erkennen einer Position und eines Bereichs der Gesichtszone auf der Basis von Gesichtserkennungstechnologie;
Bestimmen (1120) einer Position und eines Bereichs einer Oberkörperzone auf der Basis der Position und des Bereichs der Gesichtszone und einer vorgegebenen Proportion von Gesichtszone zu Oberkörperzone; und
Extrahieren (1130) der Hauptinhaltszone aus dem Anfragebild auf der Basis der Position und des Bereichs der Oberkörperzone.

7. Verfahren nach Anspruch 1 oder System nach Anspruch 4, wobei:
in dem Fall, dass mindestens zwei extrahierte visuelle Merkmale aus dem Anfragebild existieren, das Bestimmen der Ähnlichkeiten (220) der visuellen Merkmale des Anfragebilds und der visuellen Merkmale der Bilder in der Bilddatenbank Folgendes umfasst:
Durchführen von kaskadenartigen, schichtweisen Berechnungen gemäß einer vorgegebenen Sequenz verschiedener Merkmale, wobei das Durchführen der kaskadenartigen, schichtweisen Berechnungen Folgendes umfasst:
Durchführen von Berechnungen für jede Schicht, wobei das Durchführen der Berechnungen für jede Schicht Folgendes umfasst:

Bestimmen einer Ähnlichkeit auf der Basis von lediglich einem Merkmal in jeder Schicht; und
Eingeben eines Bildsatzes in eine nächste Schicht, um eine Ähnlichkeit auf der Basis eines nächsten Merkmals in der nächsten Schicht zu bestimmen, wobei jedes Bild des Bildsatzes mit einer Vorbedingung innerhalb jeder Schicht übereinstimmt.

8. Verfahren nach Anspruch 1 oder System nach Anspruch 4, wobei das Bestimmen der Kategorieinformationen, die mit dem Anfragebild assoziiert sind, auf der Basis der Kategorieinformationen der Bilder des dritten Satzes Bilder Folgendes umfasst:

Bestimmen von Kategorien (230), die den Bildern des dritten Satzes Bilder entsprechen, auf der Basis von Kategorieinformationen der Bilder, die in der Bilddatenbank gespeichert sind; und
Bestimmen einer Kategorie der Kategorien mit einer höchsten Vorkommenshäufigkeit als eine Kategorie, die mit dem Anfragebild assoziiert ist.

9. Verfahren oder System nach Anspruch 8, wobei das Bestimmen der beschreibenden Informationen, die mit dem Anfragebild assoziiert sind, Folgendes umfasst:

Extrahieren der beschreibenden Informationen aus einem Bild, das der Kategorie mit der höchsten Vorkommenshäufigkeit unter den Bildern des dritten Satzes Bilder entspricht; und
Bestimmen der beschreibenden Informationen des Anfragebilds auf der Basis der beschreibenden Informationen des Bilds, das der Kategorie mit der höchsten Vorkommenshäufigkeit entspricht.

10. Verfahren zum Erfassen von Bildtextinformationen, umfassend:

Erfassen eines Zielbilds, das unvollendete Kategorieinformationen aufweist;
Extrahieren (110) von visuellen Merkmalen des Zielbilds;
Bestimmen (120) von Ähnlichkeiten der visuellen Merkmale des Zielbilds und visueller Merkmale von Bildern in einer Bilddatenbank, umfassend:

Berechnen der Ähnlichkeiten der visuellen Merkmale des Zielbilds und der visuellen Merkmale der Bilder auf der Basis einer globalen Farbverteilung (1210) des Zielbilds und globaler Farbverteilungen der Bilder, um einen ersten Satz Bilder zu erhalten, wobei ein Bild des ersten Satzes Bilder eine Ähnlichkeit zu dem Anfragebild aufweist, die eine erste Schwelle übersteigt;
Berechnen einer Ähnlichkeit eines globalen Kantenmerkmals des Anfragebilds und eines globalen Kantenmerkmals von Bildern in dem ersten Bildsatz, um einen zweiten Satz Bilder zu erhalten, wobei ein Bild des zweiten Satzes Bilder eine Ähnlichkeit zu dem Anfragebild aufweist, die eine zweite Schwelle übersteigt; und
Berechnen einer Ähnlichkeit eines lokalen rotationsinvarianten Merkmals des Anfragebilds und eines lokalen rotationsinvarianten Merkmals von Bildern in dem zweiten Bildsatz, um einen dritten Satz Bilder zu erhalten, wobei ein Bild des dritten Satzes Bilder eine Ähnlichkeit zu dem Anfragebild aufweist, die eine dritte Schwelle übersteigt; und

Bestimmen (130) von Kategorieinformationen, beschreibenden Informationen oder einer Kombination davon, die mit dem Zielbild assoziiert sind, auf der Basis von Kategorieinformationen, beschreibenden Informationen oder einer Kombination davon von Geschäftsobjekten, die Bildern des dritten Satzes Bilder entsprechen.

11. Verfahren nach Anspruch 10, wobei das Bestimmen der Kategorieinformationen (130), die mit dem Zielbild assoziiert sind, auf der Basis der Kategorieinformationen der Bilder des dritten Satzes Bilder Folgendes umfasst:

Bestimmen von Kategorien, die den Bildern des dritten Satzes Bilder entsprechen, auf der Basis von Kategorieinformationen der Bilder, die in der Bilddatenbank gespeichert sind; und
Bestimmen einer Kategorie der Kategorien mit einer höchsten Vorkommenshäufigkeit als eine Kategorie, die mit dem Zielbild assoziiert ist.

12. System zum Erfassen von Bildtextinformationen, umfassend:

mindestens einen Prozessor, der für Folgendes konfiguriert ist:

Erfassen eines Zielbilds, das unvollendete Kategorieinformationen aufweist;
Extrahieren (110) von visuellen Merkmalen des Zielbilds;
Bestimmen von Ähnlichkeiten (120) der visuellen Merkmale des Zielbilds und visueller Merkmale von Bildern in einer Bilddatenbank, umfassend:
Berechnen der Ähnlichkeiten der visuellen Merkmale des Zielbilds und der visuellen Merkmale der Bilder auf der Basis einer globalen Farbverteilung (1210) des Zielbilds und globaler Farbverteilungen der Bilder, um einen ersten Satz Bilder zu erhalten, wobei ein Bild des ersten Satzes Bilder eine Ähnlichkeit zu dem Anfragebild aufweist, die eine erste Schwelle übersteigt;
Berechnen einer Ähnlichkeit eines globalen Kantenmerkmals des Anfragebilds und eines globalen Kantenmerkmals von Bildern in dem ersten Bildsatz, um einen zweiten Satz Bilder zu erhalten, wobei ein Bild des zweiten Satzes Bilder eine Ähnlichkeit zu dem Anfragebild aufweist, die eine zweite Schwelle übersteigt; und
Berechnen einer Ähnlichkeit eines lokalen rotationsinvarianten Merkmals des Anfragebilds und eines lokalen rotationsinvarianten Merkmals von Bildern in dem zweiten Bildsatz, um einen dritten Satz Bilder zu erhalten, wobei ein Bild des dritten Satzes Bilder eine Ähnlichkeit zu dem Anfragebild aufweist, die eine dritte Schwelle übersteigt; und
Bestimmen von Kategorieinformationen (130), beschreibenden Informationen oder einer Kombination davon, die mit dem Zielbild assoziiert sind, auf der Basis von Kategorieinformationen, beschreibenden Informationen oder einer Kombination davon von Geschäftsobjekten, die Bildern des dritten Satzes Bilder entsprechen; und

einen Speicher, der an den mindestens einen Prozessor gekoppelt ist und konfiguriert ist, Anweisungen für den mindestens einen Prozessor bereitzustellen.

13. System nach Anspruch 12, wobei das Bestimmen der Kategorieinformationen (130), die mit dem Zielbild assoziiert sind, auf der Basis der Kategorieinformationen der Bilder des dritten Satzes Bilder Folgendes umfasst:

Bestimmen von Kategorien, die den Bildern des dritten Satzes Bilder entsprechen, auf der Basis von Kategorieinformationen der Bilder, die in der Bilddatenbank gespeichert sind; und
Bestimmen einer Kategorie der Kategorien mit einer höchsten Vorkommenshäufigkeit als eine Kategorie, die mit dem Zielbild assoziiert ist.

14. Computerprogrammprodukt zum Suchen von Bildern, wobei das Computerprogrammprodukt in einem greifbaren nicht flüchtigen computerlesbaren Speichermedium enthalten ist und Computeranweisungen für Folgendes umfasst:

Empfangen eines Eingabeanfragebilds;
Extrahieren (110) von visuellen Merkmalen aus dem Eingabeanfragebild;
Bestimmen von Ähnlichkeiten (120) der visuellen Merkmale des Anfragebilds und visueller Merkmale von Bildern in einer Bilddatenbank, umfassend:

Berechnen der Ähnlichkeiten der visuellen Merkmale des Anfragebilds und der visuellen Merkmale der Bilder auf der Basis einer globalen Farbverteilung (1210) des Anfragebilds und globaler Farbverteilungen der Bilder, um einen ersten Satz Bilder zu erhalten, wobei ein Bild des ersten Satzes Bilder eine Ähnlichkeit zu dem Anfragebild aufweist, die eine erste Schwelle übersteigt; Berechnen einer Ähnlichkeit eines globalen Kantenmerkmals des Anfragebilds und eines globalen Kantenmerkmals von Bildern in dem ersten Bildsatz, um einen zweiten Satz Bilder zu erhalten, wobei ein Bild des zweiten Satzes Bilder eine Ähnlichkeit zu dem Anfragebild aufweist, die eine zweite Schwelle übersteigt; und Berechnen einer Ähnlichkeit eines lokalen rotationsinvarianten Merkmals des Anfragebilds und eines lokalen rotationsinvarianten Merkmals von Bildern in dem zweiten Bildsatz, um einen dritten Satz Bilder zu erhalten, wobei ein Bild des dritten Satzes Bilder eine Ähnlichkeit zu dem Anfragebild aufweist, die eine dritte Schwelle übersteigt;

Bestimmen von Kategorieinformationen (130), beschreibenden Informationen oder einer Kombination davon, die mit dem Anfragebild assoziiert sind, auf der Basis von Kategorieinformationen, beschreibenden Informationen oder einer Kombination davon von Geschäftsobjekten, die Bildern des dritten Satzes Bilder entsprechen; Ausführen von Suchvorgängen in der Bilddatenbank auf der Basis des Anfragebilds und der Kategorieinformationen, der beschreibenden Informationen oder einer Kombination davon, die mit dem Anfragebild assoziiert sind; Liefern von Suchergebnissen.

**15.** Computerprogrammprodukt zum Erfassen von Bildtextinformationen, wobei das Computerprogrammprodukt in einem greifbaren nicht flüchtigen computerlesbaren Speichermedium enthalten ist und Computeranweisungen für Folgendes umfasst:

Erfassen eines Zielbilds, das unvollendete Kategorieinformationen aufweist; Extrahieren (110) von visuellen Merkmalen des Zielbilds; Bestimmen von Ähnlichkeiten (120) der visuellen Merkmale des Zielbilds und visueller Merkmale von Bildern in einer Bilddatenbank, umfassend:

Berechnen der Ähnlichkeiten der visuellen Merkmale des Zielbilds und der visuellen Merkmale der Bilder auf der Basis einer globalen Farbverteilung (1210) des Zielbilds und globaler Farbverteilungen der Bilder, um einen ersten Satz Bilder zu erhalten, wobei ein Bild des ersten Satzes Bilder eine Ähnlichkeit zu dem Anfragebild aufweist, die eine erste Schwelle übersteigt; Berechnen einer Ähnlichkeit eines globalen Kantenmerkmals des Anfragebilds und eines globalen Kantenmerkmals von Bildern in dem ersten Bildsatz, um einen zweiten Satz Bilder zu erhalten, wobei ein Bild des zweiten Satzes Bilder eine Ähnlichkeit zu dem Anfragebild aufweist, die eine zweite Schwelle übersteigt; und Berechnen einer Ähnlichkeit eines lokalen rotationsinvarianten Merkmals des Anfragebilds und eines lokalen rotationsinvarianten Merkmals von Bildern in dem zweiten Bildsatz, um einen dritten Satz Bilder zu erhalten, wobei ein Bild des dritten Satzes Bilder eine Ähnlichkeit zu dem Anfragebild aufweist, die eine dritte Schwelle übersteigt; und

Bestimmen von Kategorieinformationen (130), beschreibenden Informationen oder einer Kombination davon, die mit dem Zielbild assoziiert sind, auf der Basis von Kategorieinformationen, beschreibenden Informationen oder einer Kombination davon von Geschäftsobjekten, die Bildern entsprechen, die eine Ähnlichkeit zu dem Zielbild aufweisen, die mit ersten Bildern des dritten Satzes Bilder übereinstimmt.

## Revendications

**1.** Procédé de recherche d'images, comprenant :

une réception d'une image de requête d'entrée; une extraction (110) de caractéristiques visuelles à partir de l'image de requête d'entrée ; une détermination de similarités (120) des caractéristiques visuelles de l'image de requête et de caractéristiques visuelles d'images dans une base de données d'images, comprenant :

un calcul des similarités des caractéristiques visuelles de l'image de requête et des caractéristiques visuelles des images sur la base d'une distribution de couleurs globale (1210) de l'image de requête et de distributions de couleurs globales des images pour obtenir un premier ensemble d'images, dans lequel une image du premier ensemble d'images présente une similarité avec l'image de requête dépassant un premier seuil ; un calcul d'une similarité d'une caractéristique de bords globale de l'image de requête et d'une caractéristique de bords globale d'images dans le premier ensemble d'images pour obtenir un deuxième ensemble d'images, dans lequel une image du deuxième ensemble d'images présente une similarité avec l'image de requête dépassant un deuxième seuil ; et

un calcul d'une similarité d'une caractéristique invariante de rotation locale de l'image de requête et d'une caractéristique invariante de rotation locale d'images dans le deuxième ensemble d'images pour obtenir un troisième ensemble d'images, dans lequel une image du troisième ensemble d'images présente une similarité avec l'image de requête dépassant un troisième seuil ;

une détermination (130) d'informations de catégorie, d'informations de description, ou d'une combinaison de celles-ci associée à l'image de requête sur la base d'informations de catégorie, d'informations de description, ou d'une combinaison de celles-ci d'objets commerciaux correspondant à des images du troisième ensemble d'images ;

une conduite de recherches (140) dans la base de données d'images sur la base de l'image de requête et des informations de catégorie, des informations de description, ou d'une combinaison de celles-ci associée à l'image de requête ; et

un renvoi de résultats de recherche.

2. Procédé selon la revendication 1, dans lequel l'extraction (110) des caractéristiques visuelles à partir de l'image de requête d'entrée comprend :

une extraction (1130) d'une zone de contenu principal à partir de l'image de requête ; et
une extraction (1140) de caractéristiques visuelles à partir de la zone de contenu principal.

3. Procédé selon la revendication 2, comprenant en outre :
une détermination d'un type de contenu d'un contenu principal de l'image de requête, dans lequel dans le cas où le contenu principal de l'image de requête est un contenu de type vestimentaire, l'extraction de la zone de contenu principal à partir de l'image de requête comprend :

une détection (1110) d'une zone faciale de l'image de requête et une détection d'une position et d'une région de la zone faciale, sur la base d'une technologie de détection du visage ;
une détermination (1120) d'une position et d'une région d'une zone de torse sur la base de la position et d'une région de la zone faciale et d'une proportion zone de torse sur zone faciale prédéfinie; et

une extraction (1130) de la zone de contenu principal à partir de l'image de requête sur la base de la position et d'une région de la zone de torse.

4. Système de recherche d'images, comprenant :

au moins un processeur configuré :

pour recevoir une image de requête d'entrée ;
pour extraire (110) des caractéristiques visuelles à partir de l'image de requête d'entrée ;
pour déterminer (120) des similarités des caractéristiques visuelles de l'image de requête et de caractéristiques visuelles d'images dans une base de données d'images, comprenant le fait :
de calculer les similarités des caractéristiques visuelles de l'image de requête et des caractéristiques visuelles des images sur la base d'une distribution de couleurs globale (1210) de l'image de requête et de distributions de couleurs globales des images pour obtenir un premier ensemble d'images, dans lequel une image du premier ensemble d'images présente une similarité avec l'image de requête dépassant un premier seuil ;
un calcul d'une similarité d'une caractéristique de bords globale de l'image de requête et d'une caractéristique de bords globale d'images dans le premier ensemble d'images pour obtenir un deuxième ensemble d'images, dans lequel une image du deuxième ensemble d'images présente une similarité avec l'image de requête dépassant un deuxième seuil ; et
un calcul d'une similarité d'une caractéristique invariante de rotation locale de l'image de requête et d'une caractéristique invariante de rotation locale d'images dans le deuxième ensemble d'images pour obtenir un troisième ensemble d'images, dans lequel une image du troisième ensemble d'images présente une similarité avec l'image de requête dépassant un troisième seuil ;
pour déterminer (130) des informations de catégorie, des informations de description, ou une combinaison de celles-ci associée à l'image de requête sur la base d'informations de catégorie, d'informations de description, ou d'une combinaison de celles-ci d'objets commerciaux correspondant à des images du troisième ensemble d'images ;
pour conduire des recherches (140) dans la base de données d'images sur la base de l'image de requête et des informations de catégorie, des informations de description, ou d'une combinaison de celles-ci associée à l'image de requête ; et pour renvoyer des résultats de recherche ; et

une mémoire couplée à l'au moins un processeur et configurée pour fournir des instructions à l'au moins un processeur.

5. Système selon la revendication 4, dans lequel l'extraction des caractéristiques visuelles à partir de l'image de requête d'entrée comprend le fait :

d'extraire (1130) une zone de contenu principal à partir de l'image de requête ; et d'extraire (1140) des caractéristiques visuelles à partir de la zone de contenu principal.

6. Système selon la revendication 5, dans lequel l'au moins un processeur est en outre configuré pour :

déterminer un type de contenu d'un contenu principal de l'image de requête, dans lequel dans le cas où le contenu principal de l'image de requête est un contenu de type vestimentaire,

l'extraction de la zone de contenu principal à partir de l'image de requête comprend en outre le fait :

de détecter (1110) une zone faciale sur l'image de requête et de détecter une position et une région de la zone faciale, sur la base d'une technologie de détection du visage ;

de déterminer (1120) une position et une région d'une zone de torse sur la base de la position et d'une région de la zone faciale et d'une proportion zone de torse sur zone faciale prédéfinie; et

d'extraire (1130) la zone de contenu principal à partir de l'image de requête sur la base de la position et d'une région de la zone de torse.

7. Procédé selon la revendication 1 ou système selon la revendication 4, dans lequel :

dans le cas où au moins deux caractéristiques visuelles extraites à partir de l'image de requête existent, la détermination des similarités (220) des caractéristiques visuelles de l'image de requête et des caractéristiques visuelles des images dans la base de données d'images comprend le fait :

de réaliser des calculs de type en cascade, en couches selon une séquence prédéfinie de diverses caractéristiques, la réalisation des calculs de type en cascade, en couches comprenant :

une réalisation de calculs pour chaque couche, la réalisation des calculs pour chaque couche comprend le fait :

de déterminer une similarité sur la base d'une seule caractéristique dans chaque couche ; et d'entrer un ensemble d'images dans une couche suivante pour déterminer une similarité sur la base d'une caractéristique suivante dans la couche suivante, chaque image de l'ensemble d'images étant conforme à une condition préalable à l'intérieur de chacune des couches.

8. Procédé selon la revendication 1 ou système selon la revendication 4, dans lequel la détermination des informations de catégorie associées à l'image de requête sur la base des informations de catégorie des images du troisième ensemble d'images comprend le fait :

de déterminer des catégories (230) correspondant aux images du troisième ensemble d'images sur la base d'informations de catégorie des images stockées dans la base de données d'images ; et de déterminer une catégorie des catégories avec une fréquence d'occurrence la plus grande à titre de catégorie associée à l'image de requête.

9. Procédé ou système selon la revendication 8, dans lequel la détermination des informations de description associées à l'image de requête comprend le fait :

d'extraire les informations de description à partir d'une image correspondant à la catégorie avec la fréquence d'occurrence la plus élevée parmi les images du troisième ensemble d'images ; et de déterminer les informations de description de l'image de requête sur la base des informations de description de l'image correspondant à la catégorie avec la fréquence d'occurrence la plus élevée.

10. Procédé d'acquisition d'informations textuelles d'image, comprenant :

une acquisition d'une image cible présentant des informations de catégorie non finalisées ; une extraction (110) de caractéristiques visuelles de l'image cible ; une détermination (120) de similarités des caractéristiques visuelles de l'image cible et de caractéristiques visuelles d'images dans une base de données d'images, comprenant :

un calcul des similarités des caractéristiques visuelles de l'image cible et des caractéristiques visuelles des images sur la base d'une distribution de couleurs globale (1210) de l'image cible et de distributions de couleurs globales des images pour obtenir un premier ensemble d'images, dans lequel une image du premier ensemble d'images présente une similarité avec l'image de requête dépassant un premier seuil ;

un calcul d'une similarité d'une caractéristique de bords globale de l'image de requête et d'une caractéristique de bords globale d'images dans le premier ensemble d'images pour obtenir un deuxième ensemble d'images, dans lequel une image du deuxième ensemble d'images présente une similarité avec l'image de requête dépassant un deuxième seuil ; et

un calcul d'une similarité d'une caractéristique invariante de rotation locale de l'image de requête et d'une caractéristique invariante de rotation locale d'images dans le deuxième ensemble d'images pour obtenir un troisième ensemble d'images, dans lequel une image du troisième ensemble d'images présente une similarité avec l'image de requête dépassant un troisième seuil ; et

une détermination (130) d'informations de catégorie, d'informations de description, ou d'une combinaison de celles-ci associée à l'image cible sur la base d'informations de catégorie, d'informations de description ou d'une combinaison de celles-ci d'objets commerciaux correspondant à des images du troisième ensemble d'images.

**11.** Procédé selon la revendication 10, dans lequel la détermination des informations de catégorie (130) associées à l'image cible sur la base des informations de catégorie des images du troisième ensemble d'images comprend :

une détermination de catégories correspondant aux images du troisième ensemble d'images sur la base d'informations de catégorie des images stockées dans la base de données d'images ; et une détermination d'une catégorie des catégories avec une fréquence d'occurrence la plus grande à titre de catégorie associée à l'image cible.

**12.** Système d'acquisition d'informations textuelles d'image, comprenant :

au moins un processeur configuré :

pour acquérir une image cible présentant des informations de catégorie non finalisées ;

pour extraire (110) des caractéristiques visuelles de l'image cible ;

pour déterminer des similarités (120) des caractéristiques visuelles de l'image cible et de caractéristiques visuelles d'images dans une base de données d'images, comprenant le fait :

de calculer les similarités des caractéristiques visuelles de l'image cible et des caractéristiques visuelles des images sur la base d'une distribution de couleurs globale (1210) de l'image cible et de distributions de couleurs globales des images pour obtenir un premier ensemble d'images, dans lequel une image du premier ensemble d'images présente une similarité avec l'image de requête dépassant un premier seuil ;

un calcul d'une similarité d'une caractéristique de bords globale de l'image de requête et d'une caractéristique de bords globale d'images dans le premier ensemble d'images pour obtenir un deuxième ensemble d'images, dans lequel une image du deuxième ensemble d'images présente une similarité avec l'image de requête dépassant un deuxième seuil ; et

un calcul d'une similarité d'une caractéristique invariante de rotation locale de l'image de requête et d'une caractéristique invariante de rotation locale d'images dans le deuxième ensemble d'images pour obtenir un troisième ensemble d'images, dans lequel une image du troisième ensemble d'images présente une similarité avec l'image de requête dépassant un troisième seuil ; et

pour déterminer des informations de catégorie (130), des informations de description, ou une combinaison de celles-ci associée à l'image cible sur la base d'informations de catégorie, d'informations de description, ou d'une combinaison de celles-ci d'objets commerciaux correspondant à des images du troisième ensemble d'images ; et

une mémoire couplée à l'au moins un processeur et configurée pour fournir des instructions à l'au moins un processeur.

**13.** Système selon la revendication 12, dans lequel la détermination des informations de catégorie (130) associées à l'image cible sur la base des informations de catégorie des images du troisième ensemble d'images comprend :

une détermination de catégories correspondant aux images du troisième ensemble d'images sur la base d'informations de catégorie des images stockées dans la base de données d'images ; et une détermination d'une catégorie des catégories avec une fréquence d'occurrence la plus grande à titre de catégorie associée à l'image cible.

14. Produit de programme informatique de recherche d'images, le produit de programme informatique étant intégré dans un support de stockage lisible par ordinateur non transitoire tangible et comprenant des instructions informatiques :

pour une réception d'une image de requête d'entrée ;
pour une extraction (110) de caractéristiques visuelles à partir de l'image de requête d'entrée ;
pour une détermination de similarités (120) des caractéristiques visuelles de l'image de requête et de caractéristiques visuelles d'images dans une base de données d'images, comprenant :

un calcul des similarités des caractéristiques visuelles de l'image de requête et des caractéristiques visuelles des images sur la base d'une distribution de couleurs globale (1210) de l'image de requête et de distributions de couleurs globales des images pour obtenir un premier ensemble d'images, dans lequel une image du premier ensemble d'images présente une similarité avec l'image de requête dépassant un premier seuil ;
un calcul d'une similarité d'une caractéristique de bords globale de l'image de requête et d'une caractéristique de bords globale d'images dans le premier ensemble d'images pour obtenir un deuxième ensemble d'images, dans lequel une image du deuxième ensemble d'images présente une similarité avec l'image de requête dépassant un deuxième seuil ; et
un calcul d'une similarité d'une caractéristique invariante de rotation locale de l'image de requête et d'une caractéristique invariante de rotation locale d'images dans le deuxième ensemble d'images pour obtenir un troisième ensemble d'images, dans lequel une image du troisième ensemble d'images présente une similarité avec l'image de requête dépassant un troisième seuil ;

pour une détermination d'informations de catégorie (130), d'informations de description, ou d'une combinaison de celles-ci associée à l'image de requête sur la base d'informations de catégorie, d'informations de description, ou d'une combinaison de celles-ci d'objets commerciaux correspondant à des images du troisième ensemble d'images ;
pour une conduite de recherches dans la base de données d'images sur la base de l'image de requête et des informations de catégorie, des informations de description, ou d'une combinaison de celles-ci associée à l'image de requête ; et
pour un renvoi de résultats de recherche.

15. Produit de programme informatique d'acquisition d'informations textuelles d'image, le produit de programme informatique étant intégré dans un support de stockage lisible par ordinateur non transitoire tangible et comprenant des instructions informatiques :

pour une acquisition d'une image cible présentant des informations de catégorie non finalisées ;
pour une extraction (110) des caractéristiques visuelles de l'image cible ;
pour une détermination de similarités (120) des caractéristiques visuelles de l'image cible et de caractéristiques visuelles d'images dans une base de données d'images, comprenant :

un calcul des similarités des caractéristiques visuelles de l'image cible et des caractéristiques visuelles des images sur la base d'une distribution de couleurs globale (1210) de l'image cible et de distributions de couleurs globales des images pour obtenir un premier ensemble d'images, dans lequel une image du premier ensemble d'images présente une similarité avec l'image de requête dépassant un premier seuil ;
un calcul d'une similarité d'une caractéristique de bords globale de l'image de requête et d'une caractéristique de bords globale d'images dans le premier ensemble d'images pour obtenir un deuxième ensemble d'images, dans lequel une image du deuxième ensemble d'images présente une similarité avec l'image de requête dépassant un deuxième seuil ; et
un calcul d'une similarité d'une caractéristique invariante de rotation locale de l'image de requête et d'une caractéristique invariante de rotation locale d'images dans le deuxième ensemble d'images pour obtenir un troisième ensemble d'images, dans lequel une image du troisième ensemble d'images présente une similarité avec l'image de requête dépassant un troisième seuil ; et

pour une détermination d'informations de catégorie (130), d'informations de description, ou d'une combinaison de celles-ci associée à l'image cible sur la base d'informations de catégorie, d'informations de description, ou d'une combinaison de celles-ci d'objets commerciaux correspondant à des images présentant une similarité avec l'image cible qui est conforme à de premières images du troisième ensemble d'images.

110 — EXTRACT VISUAL FEATURES FROM QUERY IMAGE

120 — DETERMINE SIMILARITY OF VISUAL FEATURES OF QUERY IMAGE AND VISUAL FEATURES OF EACH IMAGE IN IMAGE DATABASE

130 — DETERMINE CATEGORY INFORMATION, DESCRIPTIVE INFORMATION, OR COMBINATION THEREOF ASSOCIATED WITH QUERY IMAGE

140 — CONDUCT SEARCHES BASED ON QUERY IMAGE AND DETERMINED CATEGORY INFORMATION, DESCRIPTIVE INFORMATION, OR COMBINATION THEREOF ASSOCIATED WITH QUERY IMAGE

<u>100</u>

FIG. 1A

1110 — DETECT FACIAL ZONE IN QUERY IMAGE AND POSITION AND AREA OF DETECTED FACIAL ZONE

1120 — DETERMINE POSITION AND AREA OF TORSO ZONE

1130 — EXTRACT MAIN CONTENT ZONE OF QUERY IMAGE BASED ON POSITION AND AREA OF TORSO ZONE

1140 — EXTRACT VISUAL FEATURES FROM MAIN CONTENT ZONE

<u>1100</u>

FIG. 1B

1210 — CALCULATE SIMILARITY OF GLOBAL COLOR DISTRIBUTION FEATURE OF THE QUERY IMAGE AND GLOBAL COLOR FEATURE OF EACH IMAGE IN IMAGE DATABASE

1220 — CALCULATE SIMILARITY OF GLOBAL EDGE FEATURE OF QUERY IMAGE AND GLOBAL EDGE FEATURE OF EACH IMAGE IN FIRST SET OF IMAGES

1230 — CALCULATE SIMILARITY OF LOCAL ROTATION NON-VARIANT FEATURE OF THE QUERY IMAGE AND LOCAL ROTATION NON-VARIANT FEATURE OF EACH IMAGE IN SECOND SET OF IMAGES

<u>1200</u>

# FIG. 1C

210 — ACQUIRE TARGET IMAGE HAVING UNFINALIZED CATEGORY INFORMATION

220 — DETERMINE SIMILARITY OF VISUAL FEATURES OF TARGET IMAGE AND VISUAL FEATURES OF EACH IMAGE IN IMAGE DATABASE

230 — DETERMINE CATEGORY INFORMATION, DESCRIPTIVE INFORMATION, OR COMBINATION THEREOF ASSOCIATED WITH TARGET IMAGE

<u>200</u>

FIG. 2

| 310 | FEATURE EXTRACTING UNIT |
| 320 | SIMILARITY DETERMINING UNIT |
| 330 | DETERMINATION UNIT |
| 340 | SEARCH RESULT RETURNING UNIT |

<u>300</u>

FIG. 3A

3010 — MAIN CONTENT ZONE EXTRACTING UNIT

3020 — FEATURE EXTRACTING UNIT

3030 — FACIAL ZONE DETECTING UNIT

3040 — TORSO ZONE DETERMINING UNIT

3050 — MAIN CONTENT ZONE DETERMINING UNIT

3000

FIG. 3B

410 ~ | FEATURE ACQUIRING UNIT |

420 ~ | SIMILARITY DETERMINING UNIT |

430 ~ | DETERMINATION UNIT |

**400**

FIG. 4

510

Client

Network 530

520

Server

500

FIG. 5

**600**

| | | |
|---|---|---|
| | | Processor — 602 |
| 614 | | |
| 618 — Display | | |
| | | Memory — 610 |
| 604 — Keyboard | | |
| | | Removable Mass Storage Device — 612 |
| 606 — Pointing Device | | |
| | | Fixed Mass Storage Device — 620 |
| 616 — Network Interface | | |

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005162523 A